# EUROPEAN PATENT APPLICATION

(11) **EP 1 394 213 A2**
(43) Date of publication of application: **03.03.2004**
(21) Application number: 03255016.2
(22) Date of filing: 13.08.2003
(51) Int. Cl.: C08L 67/02

(54) **Polyester resin composition**

(30) Priority: 26.08.2002 US 405949 P
(71) Applicant: ROHM AND HAAS COMPANY, Philadelphia, Pennsylvania 19106-2399 (US)
(72) Inventor: Chirgott, Paul Steve, Strongsville, Ohio 44136 (US)
(74) Representative: Kent, Venetia Katherine

(57) **Abstract**

The invention provides novel polyethylene terephthalate resin compositions including: 1 to 30 wt% of an impact modifier component, and 99 to 70 wt% of a polyethylene terephthalate resin component. The impact modifier component includes graph copolymer particles having a core portion at least partially grafted to a shell portion. The core portion is obtained by enlarging the particle size of a rubber particle having an average particle size of at most 0.1 µm, and includes a butadiene (co)polymer obtained by polymerizing 30 to 100 wt% of butadiene, 70 to 0 wt% of an aromatic vinyl copolymer or an aromatic (meth)acrylate, 10 to 0 wt% of a vinyl monomer copolymerizable therewith, and 5 to 0 wt% of a cross-linking agent. The shell portion is obtained by polymerizing: 30 to 100 wt% of an aromatic vinyl compound, 70 to 0 wt% of an alkyl (meth)acrylate, and 0 to 20 wt% of a vinyl monomer. In one embodiment, the concentration of rubber in the core portion ranges from 20 to 85 weight percent. Here, at least one of the following must also exist:
1. at least a portion of the graph copolymer particles has a void-containing rubber portion,
2. the impact modifier component includes at least one of the following:
   a. at least 1 weight percent of a processing oil component,
   b. at least 2 weight percent of a processing aid component, or
   c. at least two different populations of polymeric particles.

## Description

The present invention relates to a polyester resin composition. In particular, the present invention relates to a novel amorphous-polyethylene terephthalate resin composition which comprises a core-shell graft copolymer having a core comprising a specific kind of a rubber particle and which has an excellent transparency and high impact resistance.

Polyethylene terephthalate resins are excellent in a transparency, mechanical property, and vapor barriers and widely used, especially for package materials such as a bottle and a sheet. However, much higher impact resistance is demanded because of a recent large-scaling and complicated shape of a package.

Conventionally, an addition of a fibrous inorganic filler is attempted as a means for improvement on an impact resistance of a polyethylene terephthalate resin and the impact resistance is improved. Also, there is another method in which a rubber-like polymer and a rubber-containing polymer are added to a polyethylene terephthalate resin to improve the impact resistance. Particularly, it is known that an improvement on the impact resistance is exhibited by using a core-shell polymer consisting of rubber-like polymer particles surrounded with a rigid polymer.

When applied to an amorphous-polyethylene terephthalate resin, the above process improves the impact resistance by the addition of a fibrous inorganic filler, rubber-like polymer or rubber- containing polymer but remarkably damages a transparency, and cannot maintain easily the impact resistance and the transparency to be compatible. European Application 1,125,983 attempted to address this problem through the use of a specific impact modifier composition. Accordingly to that application, the use of that specific impact modifier composition provide a transparency and an impact resistance at the same time in a composition. The impact modifier composition disclosed therein includes a core-shell graft copolymer having enlarged rubber particles which were prepared by agglomeration the core of the core-shell graft copolymers.

Notwithstanding the above, the European Application does not disclose or suggest ways of further improving the physical and processing characteristics of polyethylene terephthalate resins. The plastic manufacturing industry would greatly welcome the identification of an impact modifier composition that provides superior impact resistance and/or excellent transparency properties.

Accordingly, one object of the present invention is to provide novel thermoplastic resin system comprising an amorphous-polyethylene terephthalate resin component, and an impact modifier component, wherein the novel thermoplastic resin system has superior impact resistance and/or excellent transparency.

These and other objects will be apparent to those skilled in the art after reading the specification and appended claims.

The present invention provides an impact modified polyethylene terephthalate resin composition including: 1 to 30% by weight of an impact modifier component, and 99 to 70% by weight of a polyethylene terephthalate resin component. The impact modifier component includes graph copolymer particles which have a rubber-containing core portion at least partially grafted to a shell portion, and consist of:
a. a core portion obtained by enlarging the particle size of a rubber particle which has an average particle size of at most 0.1 µm, and which comprises a butadiene (co)polymer obtained by the polymerization of:
   1. 30 to 100% by weight of butadiene,
   2. 70 to 0% by weight of an aromatic vinyl copolymer or an aromatic (meth)acrylate,
   3. 10 to 0% by weight of a vinyl monomer copolymerizable therewith, and
   4. 5 to 0% by weight of a cross-linking agent; and
b. a shell portion obtained by a polymerization of:
   1. 30 to 100% by weight of an aromatic vinyl compound,
   2. 70 to 0% by weight of an alkyl (meth)acrylate, and
   3. 0 to 20% by weight of a vinyl monomer copolymerizable therewith.

In one embodiment, the minimum concentration of rubber in the core portion of the graph copolymer particles is greater than 20 weight percent. Also, the maximum concentration of rubber in the core portion is less than 85 weight percent. These weight percentages are based on the total weight of the graph copolymer particle. In this specific embodiment, at least one of the following must be present:
1. At least a portion of the graft copolymer particles has a void-containing rubber portion.
2. The impact modifier composition further includes at least 1 weight percent of a processing oil component..
3. The impact modifier composition further includes at least 2 weight percent of a processing aid component.
4. The impact modifier composition must contain at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.

In another embodiment, the minimum concentration of rubber in the core portion of the graph copolymer particles is greater than 85 weight percent. Also, the maximum concentration of rubber in the core portion is less than 100 weight percent. These weight percentages are based on the total weight of the graph copolymer particle. In this embodiment, any one or more of the features set out above could also, optionally, be present.

The term "units derived from" used herein refers to polymer molecules that are synthesized according to known polymerization techniques wherein a polymer contains "units derived from" its constituent monomers.

The term "molecular weight" used herein refers to the weight average molecular weight of polymer molecules as determined by the gel permeation chromatography method.

The term "alkyl (meth)acrylate" used herein refers to both alkyl acrylate and alkyl methacrylate monomer compounds.

The term "stage" used herein is intended to encompass its broadest possible meaning, including the meaning conveyed in prior art such as in U.S. Patent 3,793,402 which offers various means for achieving "staged" polymers.

The term "parts" used herein is intended to mean "parts by weight". Unless otherwise stated, "total parts by weight" do not necessarily add to 100.

The term "weight percent" used herein is intended to mean "parts per hundred by weight" wherein the total parts add to 100.

The term "particle size" used herein refers to the mean particle diameter of a population of particles.

As stated above, in one embodiment, the minimum concentration of rubber in the core portion of the graph copolymer particles is greater than 20 weight percent, or greater than 30 weight percent, or greater than 40 weight percent. Also, the maximum concentration of rubber in the core portion is less than 85 weight percent, or less than 80 weight percent, or less than 70 weight percent. In this specific embodiment, at least one of the following must be present:
1. At least a portion of the graft copolymer particles has a void-containing rubber portion.
2. The polymeric composition further includes at least one of the following:
   a. 1 weight percent of a processing oil component..
   b. at least 2 weight percent of a processing aid component.
   c. at least two different populations of polymeric particles, wherein each has a rubber-containing portion, and wherein the difference is in at least one of the following: the void concentration in the rubber-containing portions of each population, the chemical composition of each population, the average particle size of each population, or the shape of each population.

Each of these will now be discussed in detail.

### Presence Of A Void-Containing Rubber Portion

Firstly, the polymeric composition includes at least one population of polymeric particles which have a void-containing rubber portion in which the volumetric proportion of the voids defined within the rubber portion ranges from 1 to 90%.

The void-containing rubber particles can be prepared by applying techniques used in the field of paints. For example, there are (a) methods of preparing a W/O/W emulsion and polymerizing a monomer of the O layer (O: hydrophobic, W: hydrophilic); (b) methods of hollowing by swelling core-shell particles having a swellable core at a temperature of not less than Tg of the shell layer; (c) methods of two stage polymerization of polymers having different solubility parameters; (d) methods of finely dispersing a polymerizable monomer mixture containing a crosslinkable monomer and hydrophilic monomer and an oily substance in water to give a O/W emulsion and then polymerizing for crosslinking and removing the oily substance after the crosslinking; and (e) methods of using a phenomenon, in which a carboxylic acid unit copolymerized in the particle moves in the particle under acidic or alkaline conditions as set out in *"Application* of *Synthetic Latex"* by Takaaki Sugimura, *et al,* pp. 285, published by Kobunshi Kankokai (1993).

In this specific embodiment, the void-containing rubber particles can be prepared by any of the method known to those skilled in the art, including the methods set out in the prior paragraph. However, for illustrative purposes, one method of practicing process (b) is described below.

First, rubber polymer particles or hard polymer particles are used as a core. To an aqueous dispersion or latex of these polymer particles are added a monomer mixture for a rubber polymer forming a shell and an oily substance for swelling the polymer particles of the core. Thus, the polymer particles of the core are swelled by the oily substance. At the time when the polymer particles are swelled enough, the monomer mixture is polymerized to form the shell comprising the rubber polymer. Then, by removing the oily substance swelling the core, the core is shrunk and a cavity arises between the shell of rubber polymer and the polymer particle of the core. Thus, the void-containing rubber particles can be obtained.

The void-containing rubber particles have at least one cavity (hollow part) defined therein. The number of the cavities is not limited to one. The shape of the cavity or cavities is also not limited; and, the cavity or cavities may be in the form of sphere, flat sphere, pore or honeycomb. Also, on the inner surface of the cavity or cavities, there may exist concave or convex or protrusions.

The volumetric proportion (cavity ratio) of the cavity to the rubber particle typically ranges from 1 to 90%. It is within the scope of this invention for cavity ratio to range from 5 to 80%; or from 10 to 70%, or from 15 to 60%. The preferred cavity ratio depends, in part, on the desired properties of the resulting polymeric composition. After reading this specification, those skilled in the art will be able to determine the cavity ratio which meets their needs.

The average particle size of the void-containing rubber particles typically ranges from 50 to 2,000 nm. It is within the scope of this invention for these void-containing rubber particles to have an average particle size ranging from 75 to 1,750 nm; or from 100 to 1,500 nm, or from 200 to 1,000 nm. The preferred average particle size of the void-containing rubber particles depends, in part, on the desired properties of the resulting polymeric composition. After reading this specification, those skilled in the art will be able to determine the average particle size which best suits their needs.

The rubber component of these void-containing rubber particles typically has a glass transition temperature ("Tg") of not greater than 20°C. It is, however, within the scope of this invention for the Tg of this rubber component to be less than 0°C; or less than -20°C, or less than -40°C. The preferred Tg of the rubber component depends, in part, on the desired properties of the resulting polymeric composition. After reading this specification, those skilled in the art will be able to determine Tg which best suits their needs.

In this embodiment, a crosslinking agent can, optionally be present in the void-containing rubber portion of the polymeric particles. If present, the concentration of the crosslinking agent typically ranges from 0.01 to 5 weight percent. It is within the scope of this invention for the concentration of the crosslinking agent to range from 0.05 to 4 weight percent; or from 0.1 to 3 weight percent; or from 0.15 to 2 weight percent; or from 0.2 to 1 weight percent. The above weight percentages are based on the total weight of the void-containing rubber portion.

Examples of crosslinking agents that can be used when practicing this invention include: allyl methacrylate, divinylbenzene, diallyl phthalate, polyethylene glycol dimethacrylate, 1,3-butylene glycol dimethacrylate, and ethylene glycol dimethacrylate. These may be used solely or in a combination use of two or more thereof.

### Presence of a Processing Oil Component

Firstly, the polymeric composition further includes at least 1 weight percent of a processing oil component. In this embodiment, the percentage of the weight of the processing oil component to the weight of the total population of polymeric particles typically ranges from 1 to 30 weight percent; or from 2 to 25 weight percent; or from 3 to 20 weight percent.

Moreover, the ratio of the weight of the processing oil component to the weight of the polymeric composition typically ranges from 0.1:10 to 5.0:10. It is within the scope of this embodiment of the invention for this weight ratio to range from 0.5:10 to 4.5:10; or from 1.0:10 to 4.0:10; or from 1.5:10 to 3.5:10. The actual ratio used will depend upon the relative solubility of the processing oil component in the particular plastic resin and the polymeric composition. However, when the ratio is too large, problems of over lubrication can be encountered.

The term "processing oil" as it relates to the term "processing oil component" includes: (a) polymers which have a weight average molecular weight (Mw) of less than 5,000 g/mol; (b) alkylacrylates having an alkyl group containing 12 or more carbon atoms; (c) esters containing carboxylic acids or alcohols with 12 or more carbon atoms; (d) vegetable oils; (e) marine oils; (f) industrial oils; (g) palm oils; (h) animal fats; and (i) mineral oils. Examples of (a) include: polybutene, polydimethylsiloxane, polypropylene, polybutadiene, and polyisoprene. Examples of (b) include: stearyl (meth)acrylate, and lauryl (meth)acrylate. Examples of (c) include: methyl stearate, ethyl stearate, butyl stearate, and stearyl citrate. Examples of (d) include: sunflower oil, peanut oil and olive oil. An example of (e) includes: cod liver oil. Examples of (f) include: castor oil and linseed oil. An example of (g) includes: coconut oil. An example of (h) includes: tallow. Examples of (i) include: paraffinic oils with saturated straight or branched chains or rings containing at least 20 carbon atoms; naphthenic or relatively naphthenic, that is, containing saturated monocyclic (from 4 to 12 carbon atoms) or polycyclic (from 13 to 26 carbon atoms) hydrocarbon oils; microcrystalline wax, paraffin wax and low molecular weight polyolefins such as polyethylene wax, either in liquid, powder or flake form; aromatic oils with a minimum molecular weight of 300 g/mol; and white mineral oils which are a complex mixture of saturated paraffinic and naphthenic hydrocarbons and are free of aromatic compounds, sulphur containing compounds, acids and other impurities.

Under certain preferred circumstances, the processing oil component comprises mineral oils. If employed, the preferred mineral oils are typically those which are easy to handle and do not present environmental or health concerns. Such include those which have a low viscosity and those with a low volatility at the temperatures used during the milling and extrusion blending processes. Examples of specific mineral oils which have these properties include heavy mineral oils such as those termed USP mineral oils (they typically have a density ranging of from 0.86 - 0.90 g/ml), and light mineral oils (they typically have a density ranging of from 0.80-0.85g/ml). One preferred heavy mineral has a density of 0.86 g/ml; and one preferred light mineral oil has a density of 0.84 g/ml, both of these oils are available from the Aldrich Chemical Company.

When practicing this specific embodiment, it is contemplated that the processing oil component can be mixed with at least a portion of the population of polymeric particles by at least one of the following methods: (a) combining the processing oil directly or indirectly with the polymeric particles after the polymeric particles have been formed, or (b) adding the processing oil at the start of, or at some point during, the reaction process used to prepare the polymeric particles.

One example of a preferred process for combining at least one processing oil with the polymeric particles includes the following steps: (a) mixing together an aqueous surfactant solution, a first monomer material and an initiator; (b) heating the resulting mixture to polymerize the monomers; optionally (c) combining the resulting polymerized product from step (b) with a second monomer, a further initiator and further surfactant and heating the resulting mixture to produce a core/shell latex; and (d) isolating the resultant core/shell polymeric particles; wherein the processing oil is added to the reaction mixture during any one or more of the steps (a), (b), (c) or (d). It also within the scope of this embodiment for either at least a portion of the processing oil to be added after step (d), or for all of the processing oil to be added after step (d).

### Presence of a Processing Aid Component

The polymeric composition further includes at least 1 weight percent of a processing aid component. In this embodiment, the percentage of the weight of the processing aid component to the weight of the total population of polymeric particles typically ranges from 1 to 30 weight percent; or from 2 to 25 weight percent; or from 3 to 20 weight percent.

In accordance with this embodiment, the processing aid component comprises at least one population of processing aid particles. The population of processing aid particles can include single-stage particles, two-stage particles, or multi-stage polymer particles, as well as core/shell polymer particles.

When practicing this embodiment, the processing aid particles are typically comprised of polymerized units derived from one or more ethylenically unsaturated monomers. Typically, such monomers include at least one of the following: vinyl aromatics, butadiene, alkyl (meth)acrylates, and (meth)acrylonitriles.

As used in this embodiment, the terms "alkyl (meth)acrylate" refers to a C₂ to C₁₂ alkyl (meth)acrylate. It is also within the scope of this invention for the term alkyl (meth)acrylate to refer to a C₂ to C₁₀ alkyl (meth)acrylate, or a C₂ to C₈ alkyl (meth)acrylate.

In certain preferred embodiments, the processing aid particles contain at least 50 weight methyl methacrylate copolymerized with up to 50 parts by weight of at least one of the following: alkyl (meth)acrylates, styrene, and (meth)acrylonitrile. It is within the scope of this embodiment of the invention for the processing aid particles to contain at least 75 weight methyl methacrylate copolymerized with up to 25 parts by weight of at least one of the following: alkyl (meth)acrylates, styrene, and (meth)acrylonitrile.

In this embodiment, the processing aid particles can include "hard" polymeric particles having a Tg of at least 25°C; or at least 35°C; or at least 45°C, or at least 55°C. It is, however, within the scope of this invention for the processing aid particles to include "soft" polymeric particles having a Tg of at most 20°C; or at most 0°C; or at most -20°C; or at most - 40°C.

The molecular weight of the processing aid particles is typically greater than 100,000 g/mol. Generally, the molecular weight of the processing aid particles is greater than 1,000,000 g/mol. If the processing aid particles used in this embodiment include "soft" polymeric particles as defined above, then, additional advantageous results can be observed when their molecular weight is at least 2,000,000 g/mol.; or at least 3,000,000 g/mol., or at least 4,000,000 g/mol., or at least 5,000,000 g/mol.

The upper limit of the molecular weight for the hard or soft polymeric particles of the processing aid is determined, in part, by the processing conditions to which they are exposed, as well as their desired end use. Typically, their molecular weight is less than 12,000,000 g/mol., or less than 10,000,000 g/mol, or less than 8,000,000 g/mol.

Hard polymeric processing aid particles may be formed from homo- or copolymers of monomers such as styrene, methyl methacrylate, butyl acrylate, and ethyl acrylate, especially when the particle is prepared as a single-stage polymer particle. Although it is preferred that the processing aid particles contain no crosslinker, the polymers may contain one or more units derived from multifunctional monomers containing two or more double bonds, such as from about 0.1 to about 5% of at least one of ALMA, allyl acrylate, DALMA, diallyl fumarate, divinylbenzene, a di- or triacrylate ester of a polyol, or a di- or trimethacrylate ester of a polyol.

Soft polymeric processing aid particles may comprise at least a first polymeric stage, wherein at least 50 weight percent of the first polymeric stage comprises a first polymeric component having units derived from one or more of the following: butadiene, and alkyl (meth)acrylates. Thus, the polymeric compositions which have a first polymeric stage comprising copolymers of butadiene and an alkyl (meth)acrylate(s), in any ratio, are encompassed by this invention.

The preferred first polymeric stage of such soft polymeric processing aid particles depends, in part, on the processing conditions to which the processing aid particles are exposed, as well as their desired end use. In one preferred embodiment, at least 50 weight percent of the first polymeric stage comprises a first polymeric component having units derived from one or more alkyl (meth)acrylate, or at least 60 weight percent of one or more alkyl (meth)acrylate, or at least 70 weight percent of one or more alkyl (meth)acrylate, or at least 80 weight percent of one or more alkyl (meth)acrylate.

The upper weight percent limit of the first polymeric component of soft polymeric processing aid particles also depends, in part, on the processing conditions to which the polymeric compositions are exposed, as well as their desired end use. In one preferred embodiment, 100 weight percent of the first polymeric stage comprises a first polymeric component having units derived from one or more alkyl (meth)acrylate, or at most 95 weight percent of one or more alkyl (meth)acrylate, or at most 90 weight percent of one or more alkyl (meth)acrylate, or at most 85 weight percent of one or more alkyl (meth)acrylate.

In the above illustrative examples wherein the first polymeric stage of the soft polymeric processing aid particles comprises a first polymeric component having units derived from one or more alkyl (meth)acrylate, in one preferred embodiment, the first polymeric component has units derived from at least one of the following: ethyl acrylate, butyl acrylate, hexyl acrylate, octyl acrylate, or 2-ethylhexyl acrylate. In another preferred embodiment, the first polymeric component of the soft processing aid particles has units derived from at least one of the following: ethyl acrylate, butyl acrylate, or 2-ethylhexyl acrylate. In still another preferred embodiment, the first polymeric component of the soft processing aid particles has units derived from ethyl acrylate.

In instances where the first polymeric component is less than 100 weight percent of the first polymeric stage, the remaining weight percentage can be made up of at least a second polymeric component. It is within the scope of this embodiment of the invention for there to be a plurality of subsequent polymeric components.

If present, the preferred amount of the second polymeric component depends, in part, on the processing conditions to which the polymeric compositions of the present invention are exposed, as well as their desired end use. In one preferred embodiment, at least 5 weight percent of the first polymeric stage comprises a second polymeric component, or at least 10 weight percent of the first polymeric stage comprises a second polymeric component, or at least 15 weight percent of the first polymeric stage comprises a second polymeric component.

The upper weight percent limit of the second polymeric component present also depends, in part, on the processing conditions to which the polymeric compositions of the present invention are exposed, as well as their desired end use. In one preferred embodiment, 50 weight percent of the first polymeric stage comprises a second polymeric component, or at most 40 weight percent of the first polymeric stage comprises a second polymeric component, or at most 30 weight percent of the first polymeric stage comprises a second polymeric component.

If present, the second polymeric component can be any suitable polymeric compound that yields a Tg of 20°C or less for the final polymeric composition. Examples of such suitable polymeric compounds include: other C₁ to C₁₈ alkyl (meth)acrylates , isoprene, vinyl acetate, , styrene, alpha methyl styrene , acidic monomers such as acrylic acid or isobutylene, (meth)acrylonitrile, *etc*.

The preferred second polymeric component depends, in part, by the processing conditions to which the polymeric compositions of the present invention are exposed, as well as their desired end use. If used as a plastic additive, in one preferred embodiment, the second polymeric component comprises at least one of the following: C₁ to C₁₈ alkyl (meth)acrylates, alpha methyl styrene, styrene, acidic monomers such as (meth)acrylic acid. In another preferred embodiment, the second polymeric component comprises at least one of the following: C₁ to C₁₈ alkyl (meth)acrylates.

The first polymeric stage can also contain units derived from at least one multi-unsaturated monomer. If present, the concentration of such units ranges from 0.01 weight percent to 5 weight percent of the total weight of the core portion. The multi-unsaturated monomer may be one in which the unsaturated groups are similar and of equal reactivity, such as in divinyl benzene, divinyl adipate, ethylene glycol dimethacrylate, butylene glycol diacrylate, trimethylolpropane trimethacrylate, and the like. On the other hand, the multi-unsaturated monomer may be one in which the unsaturated groups are dissimilar and of unequal reactivity, such as in diallyl maleate, allyl methacrylate, allyl acrylate, and the like.

The processing aid particles used when practicing this embodiment can be prepared by any means known to those skilled in the art. One example of a known process is emulsion polymerization (*e.g.*, US Patent 3,833,686). This process can provide populations of processing aid particles having a mean particle size ranging from 10 to 1,000 nm. It is within the scope of this invention for the populations of processing aid particles to have a mean particle size ranging from 20 to 800 nm; or from 30 to 600 nm; or from 40 to 400 nm.

### Presence of At Least Two Different Populations Of Rubber- Containing Polymeric Particles

The polymeric composition contains at least two different populations of polymeric particles, wherein each has a rubber-containing portion, and wherein the differences are at least one of the following: the void ratio of their rubber containing portions, their chemical compositions, the average sizes of their particles, or the shapes of their particles.

If the difference between the populations is their average particle sizes, there will be a population having a "large" particle size, and a population having a "small" particle size.
The average particle size of the large particles is at least 20 percent larger than the average particle size of the small particles. It is within the scope of this embodiment for the average particle size of the large particles to be at least 30 percent larger; or at least 40 percent larger; or at least 50 percent larger than the average particle size of the small particles.

In this embodiment, the large particles typically have a mean particle diameter which ranges from 50 to 7,000 nm. It is within the scope of this invention for the large particles to have a mean particle diameter which ranges from 100 to 5,000 nm; or from 200 to 3,000 nm; or from 300 to 1,000 nm.

On the other hand, the small particles typically has a mean particle diameter which ranges from 10 to 1,000 nm. It is within the scope of this invention for the small particles to have a mean particle diameter which ranges from 30 to 800 nm; or from 50 to 600 nm; or from 100 to 400 nm.

If the difference between the populations of particles is shape, this can include populations of particles having different morphologies such as: ellipsoidal particles having an aspect ratio greater than 1:1; raspberry-shaped particles; multi-lobe-shaped particles; dumbbell-shaped particles; agglomerated particles; round particles, cylindrical particles, abstract-shaped particles, bi-lobal particles, or circular particles.

If the difference between the populations of particles is the void ratio of their respective rubber-containing portions, the volumetric proportion of the voids defined within one of the populations is at least 20 percent greater than the volumetric proportion of voids defined within the other population of polymeric particles. It is within the scope of this invention for the volumetric proportion of the voids defined within one of the populations is at least 30 percent greater, or at least 40 percent greater, or at least 50 percent greater than the volumetric proportion of voids defined within the other population of polymeric particles.

Also as stated above, in another embodiment, the minimum concentration of rubber in the core portion of the graph copolymer particles is greater than 85 weight percent. Also, the maximum concentration of rubber in the core portion is less than 100 weight percent.

In this embodiment, the existence the additional features identified above as "Presence Of A Void-Containing Rubber Portion", "Presence of a Processing Oil Component", "Presence of a Processing Aid Component", and "Presence of at Least Two Different Populations of Rubber-Containing Polymeric Particles" do not need to exist. It is, however, within the scope of this invention for these feature to be present in this embodiment.

As stated above, when practicing any embodiment of this invention, the impact modifier component includes graph copolymer particles which have a rubber-containing core portion is at least partially grafted to a shell portion, and consist of:
a. a core portion obtained by enlarging the particle size of a rubber particle which has an average particle size of at most 0.1 µm, and which comprises a butadiene (co)polymer obtained by the polymerization of:
   1. 30 to 100% by weight of butadiene,
   2. 70 to 0% by weight of an aromatic vinyl copolymer or an aromatic (meth)acrylate,
   3. 10 to 0% by weight of a vinyl monomer copolymerizable therewith, and
   4. 5 to 0% by weight of a cross-linking agent; and
b. a shell portion obtained by a polymerization of:
   1. 30 to 100% by weight of an aromatic vinyl compound,
   2. 70 to 0% by weight of an alkyl (meth)acrylate, and
   3. 0 to 20% by weight of a vinyl monomer copolymerizable therewith.

The above aromatic vinyl compound refers to a compound having one vinyl double bond and at least one benzene nucleus within a molecule. Examples thereof include styrene, 4- methoxystyrene, 4-ethoxystyrene, 4-propoxystyrene, 4-buthoxystyrene, 2- methylstyrene, 3-methylstyrene, 4-methylstyrene, 4-ethylstyrene, 2,5- dimethylstyrene, 2-chlorostyrene, 3-chlorostyrene, 4-chlorostyrene, 2,4- dichlorostyrene, 4-bromostyrene, 2,5-dichlorostyrene, α-methylstyrene and the like. Among them, styrene and α- methylstyrene are preferable from a point that the refractive index of the rubber particle increases close to that of the amorphous-polyethylene terephthalate resin to improve a transparency of a molded article made of the resin composition and a point of a high copolymerization reactivity with butadiene.

The above aromatic (meth)acrylate refers to an ester of acrylic acid or methacrylic acid with an aromatic compound having a hydroxyl group. Examples thereof include phenyl methacrylate, phenyl acrylate and the like. Among them, phenyl methacrylate is preferable from a point that the refractive index of the rubber particle increases close to that of the amorphous-polyethylene terephthalate resin to improve the transparency of the resin composition.

Examples of the above copolymerizable vinyl monomer include a (meth)acrylate other than the aromatic (meth)acrylate. Examples thereof include an ester of an alcohol having 1 to 8 carbon atoms with acrylic acid or methacrylic acid such as methyl methacrylate, ethyl methacrylate, butyl methacrylate, methyl acrylate, ethyl acrylate or butyl acrylate; a vinyl cyanide compound such as acrylonitrile, methacrylonitrile, vinylidene cyanate or 1,2-dicyanoethylene; a maleimide compound; acrylic acid; and methacrylic acid. Among them, ethyl acrylate and butyl acrylate are preferable from a point of a high polymerization reactivity and a point that Tg of the rubber polymer thereof is not increased.

Examples of the above cross-linking agent include divinylbenzene, ethylene glycol dimethacrylate, polyethylene glycol dimethacrylate and the like.

The average particle size of the rubber comprising a butadiene (co)polymer is at most 0.1 µm, preferably 0.0001 to 0.09 µm. When larger than 0.1 µm, the particle size becomes difficult to be enlarged and seems to decrease the impact strength and the transparency of a final composition.

The rubber particle comprising the butadiene (co)polymer can be enlarged according to a freezing process, an enlarging process with an mechanical shear force, an acidic substance adding process and other processes. From viewpoints of a productivity and an equipment investment, preferable is a process of enlarging the particle size of the rubber by agglomeration by using a water-soluble electrolyte during a graft-polymerization for forming the shell layer on rubber particles or a process by using an acid-group containing latex comprising a copolymer of a (meth)acrylate and an unsaturated acid.

Examples of the above water-soluble electrolyte include a compound which dissociates into Na+, K+ , Ca++, Al+++, NH4+, H+ or the like, and Cl-, Br-, SO₄--, S₂O₃--, NO₃-, NO₂ -, PO₄---, CO₃--, OH- or the like. The water-soluble electrolyte includes, for example, NaCl, KCI, Na₂SO₄, CaCl₂, AlCl₃and the like.

The amount of the water-soluble electrolyte is preferably 0.5 to 5 parts by weight based on 100 parts by weight of the core-shell graft copolymer. Too large amount of the water-soluble electrolyte increases polymerization scale while too small amount makes it difficult to enlarge the particle size.

Examples of the above (meth)acrylate used for the above acid group-containing latex include a (meth)acrylate of a linear or side-chain alcohol having 1 to 12 carbon atoms. Also, examples of the unsaturated acid include acrylic acid, methacrylic acid, itaconic acid, itaconic acid monoester, maleic acid monoester, crotonic acid and the like.

The agglomerated rubber particle comprising the butadiene copolymer gives an enlarged rubber particle maintaining an original rubber particle shape to some extent and a plurality of them. This enlarged rubber particle by agglomeration increases an improvement of the impact resistance compared with the original particle.

The shell layer can be obtained by a polymerization of 30 to 100%, preferably 50 to 100% by weight of an aromatic vinyl compound, 70 to 0%, preferably 50 to 0% by weight of an alkyl (meth)acrylate and 0 to 20 %, preferably 0 to 10 % by weight of a copolymerizable vinyl monomer. The shell layer can be formed by, for example, a graft polymerization onto the rubber particle.

The above aromatic vinyl compound forming the shell layer refers to a compound having one vinyl double bond and at least one benzene nucleus within a molecule. Examples thereof include styrene, 4-methoxystyrene, 4-ethoxystyrene, 4-propoxystyrene, 4-buthoxystyrene, 2-methylstyrene, 3-methylstyrene, 4-methylstyrene, 4- ethylstyrene, 2,5-dimethylstyrene, 2-chlorostyrene, 3-chlorostyrene, 4- chlorostyrene, 2,4-dichlorostyrene, 4-bromostyrene, 2,5-dichlorostyrene, α-methylstyrene and the like. Among them, styrene and α- methylstyrene are preferable from a point that the refractive index of the graft copolymer increases close to that of the amorphous-polyethylene terephthalate resin to improve a transparency of the article made of the composition and a point of a high polymerization reactivity.

The above alkyl (meth)acrylate forming the shell layer refers to an ester of acrylic acid or methacrylic acid with an alcohol. Examples thereof include an ester of an alcohol having 1 to 8 carbon atoms with (meth)acrylic acid such as methyl methacrylate, ethyl methacrylate, butyl methacrylate, methyl acrylate, ethyl acrylate or butyl acrylate. Among them, methyl methacrylate, butyl acrylate, and ethyl acrylate are preferable from a viewpoint that compatibility with the amorphous- polyethylene terephthalate resin is improved.

Examples of the above copolymerizable vinyl monomer forming the shell layer include acrylonitrile, methacrylonitrile, vinylidene cyanate, 1,2-dicyanoethylene, a maleimide compound, (meth)acrylic acid and the like.

Too small amount of the above aromatic vinyl compound forming the shell layer makes the refractive index of the graft copolymer distant from that of the amorphous-polyethylene terephthalate resin and decreases the transparency of the article made of the resin composition.

Too large amount of the above alkyl (meth)acrylate monomer forming the shell layer makes the refractive index of the graft copolymer distant from that of the amorphous-polyethylene terephthalate resin and decreases the transparency of the article made of the resin composition.

The average particle size of the above core-shell graft copolymer is 0.1 to 0.5 µm, preferably 0.1 to 0.3 µm. When it is smaller than 0.1 µm, the improvement of the impact resistance remains small. When it is larger than 0.5 µm, the transparency is largely decreased.

The above core-shell graft copolymer can be obtained by an emulsion polymerization, a suspension polymerization, a solution polymerization and the like. The emulsion polymerization is preferable in that the particle size of the rubber particles can be easily adjusted. A procedure and an order of the emulsion polymerization are not particularly limited.

The procedure of adding the monomer mixture for forming the shell layer is not particularly limited. Useful are a continuous one-stage addition, a two-stage addition and the like.

The amorphous-polyethylene terephthalate resin, which is to be improved according to the present invention, means a resin having no substantial crystallinity or a crystallinity low enough to the degree that does not affect the transparency. Examples thereof include a homopolymer, a copolymer or a mixture thereof which are obtained by a condensation polymerization of a diol compound comprising at least 50 % by mole, particularly at least 70 % by mole of ethylene glycol with a dicarboxylic acid compound comprising at least 50 % by mole, particularly 70 % by mole of terephthalic acid or an alkyl ester thereof. Examples of the copolymer include those obtained by a copolymerization with the other dicarboxylic acid compound such as isophthalic acid, a halogenated terephthalic acid or the like within a range of at most 50 % by mole of the total dicarboxylic acid compound, by a copolymerization with a polyalkylene glycol such as diethylene glycol or the like within a range of at most 50 % by mole of the total diol compound, or by a copolymerization with an alkylene glycol having 3 to 12 carbon atoms such as 1,4-cyclohexane dimethanol or the like.

The resin composition of the present invention comprises 1 to 30 % by weight, preferably 3 to 20 % by weight of the core-shell graft copolymer, and 99 to 70 % by weight, preferably 97 to 80 % by weight of the amorphous-polyethylene terephthalate resin. When the amount of the core-shell graft copolymer is less than 1 % by weight and the amount of the amorphous polyethylene terephthalate resin is more than 99 % by weight, a sufficient impact resistance cannot be obtained. When the amount of the core-shell graft copolymer is more than 30 % by weight and the amount of the amorphous-polyethylene terephthalate resin is less than 70 % by weight, the transparency of the molded article is remarkably decreased.

As a process for preparing the resin composition of the present invention, there can be used, for example, a process in which the core-shell graft copolymer and the amorphous-polyethylene terephthalate resin are prepared separately to be mixed together by using a Henshell mixer, a tumbler, a Banbury mixer or the like and molded with a single screw extruder, a twin screw extruder or the like.

The resin composition of the present invention can further comprise an anti-oxidant, a heat stabilizer, an improving agent for light resistance, an ultraviolet ray absorber, a lubricant, a plasticizer, a mold releasing agent, an anti-static agent, a sliding improving agent, a colorant and the like.

## Claims

1. An impact modified polyethylene terephthalate resin composition comprising:
a. 99 to 70% by weight of a polyethylene terephthalate resin component, and
b. 1 to 30% by weight of an impact modifier component comprising graph copolymer particles, wherein said graph copolymer particles:
1) have a rubber-containing core portion at least partially grafted to a shell portion,
2) have a minimum concentration of rubber in the core portion greater than 85 weight percent, and
3) consist of:
a) a core portion obtained by enlarging the particle size of a rubber particle which has an average particle size of at most 0.1 µm, and which comprises a butadiene (co)polymer obtained by the polymerization of:
(1) 30 to 100% by weight of butadiene,
(2) 70 to 0% by weight of an aromatic vinyl copolymer or an aromatic (meth)acrylate,
(3) 10 to 0% by weight of a vinyl monomer copolymerizable therewith, and
(4) 5 to 0% by weight of a cross-linking agent; and
b) a shell portion obtained by a polymerization of:
(1) 30 to 100% by weight of an aromatic vinyl compound,
(2) 70 to 0% by weight of an alkyl (meth)acrylate, and
(3) 0 to 20% by weight of a vinyl monomer copolymerizable therewith.

2. An impact modified polyethylene terephthalate resin composition as recited in claim 1, wherein the core portion is obtained by agglomeration and enlarging of the particle size of the rubber comprising the butadiene (co)polymer by using a water-soluble electrolyte.

3. An impact modified polyethylene terephthalate resin composition as recited in claim 1, wherein the core portion is obtained by enlarging the particle size of the rubber comprising the butadiene (co)polymer by using an acid group-containing latex comprising a copolymer of a (meth)acrylate and an unsaturated acid.

4. An impact modified polyethylene terephthalate resin composition as recited in claim 1, wherein:
a. the aromatic vinyl compound comprises a compound having one vinyl double bond and at least one benzene nucleus within a molecule,
b. the aromatic (meth)acrylate comprises an ester of acrylic acid or methacrylic acid with an aromatic compound having a hydroxyl group,
c. the vinyl monomer comprises a (meth)acrylate other than the aromatic (meth)acrylate, and
d. the cross-linking agent comprises at least one of the following:
divinylbenzene, ethylene glycol dimethacrylate, and polyethylene glycol dimethacrylate.

5. An impact modified polyethylene terephthalate resin composition as recited in claim 1, comprising from 3 to 20 % by weight of the impact modifier component, and 97 to 80 % by weight of the amorphous-polyethylene terephthalate resin component.

6. An impact modified polyethylene terephthalate resin composition as recited in claim 1, wherein the impact modifier component further comprises at least one of the following:
a. a population of polymeric particles, wherein said polymeric particles comprise void-containing rubber portion, wherein the volumetric proportion of the voids defined therein ranges from 1 to 90 percent, and wherein the void-containing rubber portion comprises from 20 to 90 weight percent of the individual polymeric particles,
b. at least 1 weight percent of a processing oil component;
c. at least 2 weight percent of a processing aid component;
d. at least two different populations of polymeric particles, wherein each has a rubber-containing portion, and wherein the difference between the populations is in at least one of the following areas:
1) the void concentration in the rubber-containing portions of each population,
2) the chemical composition of each population,
3) the average particle size of each population, and
4) the shape of each population.

7. An impact modified polyethylene terephthalate resin composition comprising:
a. 99 to 70% by weight of a polyethylene terephthalate resin component, and
b. 1 to 30% by weight of an impact modifier component comprising:
1) graph copolymer particles, wherein said graph copolymer particles:
a) have a rubber-containing core portion at least partially grafted to a shell portion,
b) have a concentration of rubber in the core portion ranging from 20 to 85 weight percent, and
c) consist of:
(1) a core portion obtained by enlarging the particle size of a rubber particle which has an average particle size of at most 0.1 µm, and which comprises a butadiene (co)polymer obtained by the polymerization of:
(a) 30 to 100% by weight of butadiene,
(b) 70 to 0% by weight of an aromatic vinyl copolymer or an aromatic (meth)acrylate,
(c) 10 to 0% by weight of a vinyl monomer copolymerizable therewith, and
(d) 5 to 0% by weight of a cross-linking agent; and
(2) a shell portion obtained by a polymerization of:
(a) 30 to 100% by weight of an aromatic vinyl compound,
(b) 70 to 0% by weight of an alkyl (meth)acrylate, and
(c) 0 to 20% by weight of a vinyl monomer copolymerizable therewith; and
2) at least one of the following:
a) a population of polymeric particles, wherein said polymeric particles comprise void-containing rubber portion, wherein the volumetric proportion of the-voids defined therein ranges from 1 to 90 percent, and wherein the void-containing rubber portion comprises from 20 to 90 weight percent of the individual polymeric particles,
b) at least 1 weight percent of a processing oil component;
c) at least 2 weight percent of a processing aid component;
d) at least two different populations of polymeric particles, wherein each has a rubber-containing portion, and wherein the difference between the populations is in at least one of the following areas:
(1) the void concentration in the rubber-containing portions of each population,
(2) the chemical composition of each population,
(3) the average particle size of each population, and
(4) the shape of each population.

8. An impact modified polyethylene terephthalate resin composition as recited in claim 7, wherein concentration of rubber in the core portion of the graph copolymer particles ranges from 30 to 80 weight percent.

9. An impact modified polyethylene terephthalate resin composition as recited in claim 7, wherein:
a. the aromatic vinyl compound comprises a compound having one vinyl double bond and at least one benzene nucleus within a molecule,
b. the aromatic (meth)acrylate comprises an ester of acrylic acid or methacrylic acid with an aromatic compound having a hydroxyl group,
c. the vinyl monomer comprises a (meth)acrylate other than the aromatic (meth)acrylate, and
d. the cross-linking agent comprises at least one of the following:
divinylbenzene, ethylene glycol dimethacrylate, and polyethylene glycol dimethacrylate.

10. An impact modified polyethylene terephthalate resin composition as recited in claim 7, comprising from 3 to 20 % by weight of the impact modifier component, and 97 to 80 % by weight of the amorphous-polyethylene terephthalate resin component.
